# EUROPEAN PATENT APPLICATION

(11) **EP 3 739 768 A1**
(43) Date of publication of application: **18.11.2020**
(21) Application number: 18900533.3
(22) Date of filing: 12.01.2018
(51) Int. Cl.: H04B 7/06, H04B 7/0456, H04W 16/28, H04W 76/10

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); LIU, Min, Beijing 100190 (CN); WANG, Jing, Beijing 100190 (CN); NA, Chongning, Beijing 100190 (CN)
(74) Representative: Hoffmann Eitle
(86) International application number: PCT/JP2018/000580
(87) International publication number: WO 2019/138531

(57) **Abstract**

In order to control a beam failure recovery procedure properly, a user terminal according to one aspect of the present disclosure has a transmitting section that transmits a beam failure recovery request, a receiving section that receives a response signal to the beam failure recovery request, and a control section that controls at least one of whether or not to receive a control resource set and a type of a control resource set to receive, in at least one of a first period from transmission of the beam failure recovery request to start of monitoring for the response signal, a second period from the start of monitoring for the response signal to receipt of the response signal, and a third period from the receipt of the response signal to when reconfiguration is performed.

## Description

### Technical Field

The present disclosure relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency, and so on (see non-patent literature 1). In addition, the specifications of LTE-A (LTE-Advanced and LTE Rel. 10, 11, 12 and 13) have also been drafted for the purpose of achieving increased capacity and enhancement beyond LTE (LTE Rel. 8 and 9).

Successor systems of LTE are also under study (for example, referred to as "FRA (Future Radio Access)," "5G (5th Generation mobile communication system)," "5G+ (plus)," "NR (New Radio)," "NX (New radio access)," "FX (Future generation radio access)," "LTE Rel. 14, 15 and later versions," etc.).

In existing LTE systems (LTE Rel. 8 to 13), the quality of a radio link is subject to monitoring (RLM (Radio Link Monitoring)). When a radio link failure (RLF) is detected based on RLM, a user terminal (UE (User Equipment)) is required to re-establish the RRC (Radio Resource Control) connection.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Envisaging future radio communication systems (for example, LTE Rel. 14 or later versions, NR, 5G, etc.), research is underway to carry out communication by using beamforming (BF). Also, in order to prevent radio link failures (RLFs) from occurring, studies are underway to perform the procedures for switching to other beams (also referred to as "beam failure recovery (BFR)") when the quality of a particular beam deteriorates (beam failure).

However, how to control the UE operation and others during the procedures for switching to other beams (also referred to as "BFR procedures") has not been studied enough yet. If a downlink control channel or the like in the BFR procedures is not transmitted/received in a proper manner, a deterioration of the quality of communication and/or the like might arise.

It is therefore an object of the present disclosure to provide a user terminal and a radio communication method, whereby beam failure recovery procedures can be controlled properly.

### Solution to Problem

In accordance with one aspect of the present disclosure, a user terminal has a transmitting section that transmits a beam failure recovery request, a receiving section that receives a response signal to the beam failure recovery request, and a control section that controls at least one of whether or not to receive a control resource set and a type of a control resource set to receive, in at least one of a first period from transmission of the beam failure recovery request to start of monitoring for the response signal, a second period from the start of monitoring for the response signal to receipt of the response signal, and a third period from the receipt of the response signal to when reconfiguration is performed.

### Advantageous Effects of Invention

According to one aspect of the present disclosure, beam failure recovery procedures can be controlled properly.

### Brief Description of Drawings

FIG. 1 is a diagram to show an example of BFR procedures;
FIG. 2 is a diagram to show another example of BFR procedures;
FIG. 3 is a diagram to show an exemplary schematic structure of a radio communication system according to the present embodiment;
FIG. 4 is a diagram to show an exemplary overall structure of a radio base station according to the present embodiment;
FIG. 5 is a diagram to show an exemplary functional structure of a radio base station according to the present embodiment;
FIG. 6 is a diagram to show an exemplary overall structure of a user terminal according to the present embodiment;
FIG. 7 is a diagram to show an exemplary functional structure of a user terminal according to the present embodiment; and
FIG. 8 is a diagram to show an exemplary hardware structure of a radio base station and a user terminal according to the present embodiment.

### Description of Embodiments

Future radio communication systems (for example, LTE Rel. 14 or later versions, NR or 5G, etc.) are under study to carry out communication by using beamforming (BF).

For example, a user terminal and/or a radio base station (for example, a gNB (gNodeB)) may use beams for use for transmitting signals (also referred to as "transmitting beams," "Tx beams," etc.), beams for use for receiving signals (also referred to as "receiving beams," "Rx beams," etc.), and so forth. A pair of a transmitting beam of the transmitting end and a receiving beam of the receiving end may be referred to as a "beam pair link (BPL)."

In an environment to use BF, radio links are more susceptible to the impact of obstacle-induced blockage, and therefore the quality of radio links is likely to deteriorate. There is a danger that, if the quality of radio links deteriorates, radio link failures (RLFs) might occur frequently. Since it is necessary to re-connect with cells when an RLF occurs, frequent occurrence of RLFs might lead to a decline in system throughput.

Consequently, envisaging the above future radio communication systems, the method of radio link monitoring (RLM) is being discussed. For example, for future radio communication systems, research is underway to support one or more downlink signals for RLM (also referred to as "DL-RSs (Reference Signals)" or the like).

Resources for the DL-RSs (DL-RS resources) may be associated with resources and/or ports for synchronization signal blocks (SSBs) or channel state measurement RSs (CSI-RSs (Channel State Information RSs)). Note that SSBs may be referred to as "SS/PBCH (Physical Broadcast CHannel) blocks" and the like.

DL-RSs may be at least one of a primary synchronization signal (PSS (Primary SS)), a secondary synchronization signal (SSS (Secondary SS)), a mobility reference signal (MRS (Mobility RS)), a CSI-RS, a tracking reference signal (TRS (Tracking RS)), a demodulation reference signal (DMRS), a beam-specific signal and so forth, or may be a signal that is formed by enhancing and/or modifying at least one of these signals (for example, a signal that is formed by changing the density and/or the period of at least one of these signals).

A user terminal may be configured, through higher layer signaling, to perform measurements by using DL-RS resources. The assumption here may be that the user terminal, where such measurements are configured, determines whether a radio link is in a synchronous state ("IS" (In-Sync)) or in an asynchronous state ("OOS" (Out-Of-Sync)), based on measurement results in DL-RS resources. Default DL-RS resources to allow the user terminal to conduct RLM in the event no DL-RS resource is configured from a radio base station may be set forth in the specification.

When the quality of a radio link estimated (or "measured") based at least on one DL-RS resource that is configured exceeds a predetermined threshold (for example, Qᵢₙ), the user terminal may judge that the radio link is in IS.

When the quality of a radio link estimated based at least on one DL-RS resource that is configured falls below a predetermined threshold (for example, Qₒᵤₜ), the user terminal may judge that the radio link is in OOS. Note that the radio link quality here may correspond to, for example, the block error rate (BLER) of a hypothetical PDCCH.

IS and/or OOS, which are judged at regular intervals (periodically), may be referred to as "periodic IS (P-IS)/periodic OOS (P-OOS)." For example, IS/OOS to be judged using RLM-RSs may be P-IS/OOS.

In existing LTE systems (LTE Rel. 8 to 13), IS and/or OOS (IS/OOS) are indicated from the physical layer to higher layers (for example, the MAC layer, the RRC layer, etc.) in a user terminal, and RLF is detected based on IS/OOS indications.

To be more specific, when a user terminal receives an OOS indication for a predetermined cell (for example, the primary cell) a predetermined number of times (for example, N310 times), the user terminal will activate (start) a timer T310. If the user terminal receives an IS indication for the predetermined cell N311 times while the timer T310 is running, the user terminal will stop the timer T310. If the timer T310 expires, the user terminal judges that RLF has been detected with respect to this predetermined cell.

Note that the names "N310," "N311," "T310" and others are by no means limiting. T310 may be referred to as the "timer for RLF detection" or the like. N310 may be referred to as "the number of times OOS is indicated before the timer T310 is activated" or the like. N311 may be referred to as "the number of times IS is indicated before the timer T310 is stopped" or the like.

Now, envisaging future radio communication systems (for example, LTE Rel. 14 or later versions, NR, 5G, etc.), research is underway to execute procedures for switching to other beams (which may be referred to as "beam failure recovery (BFR)," "L1/L2 beam recovery," etc.) when the quality of a particular beam deteriorates, so as to prevent RLF from occurring.

RLF is detected by controlling RS measurements in the physical layer and the activation and expiration of a timer in a higher layer, and recovery from RLF should follow the same procedures as random access. Meanwhile, there is an expectation that the procedures for switching to other beams (BFR and L1/L2 beam recovery) will be made simpler than recovery from RLF, at least in part of the layers. Note that the BFR procedures may be referred to as "BFR request procedures," "link reconfiguration procedures," and so on.

BFR procedures may be triggered by a beam failure. As used herein, a beam failure may indicate, for example, that one, several or all of the control channels have not been detected in UE and/or a base station for a predetermined period, or that the measurement result of the received quality of a reference signal linked with a control channel has failed to fulfill predetermined quality.

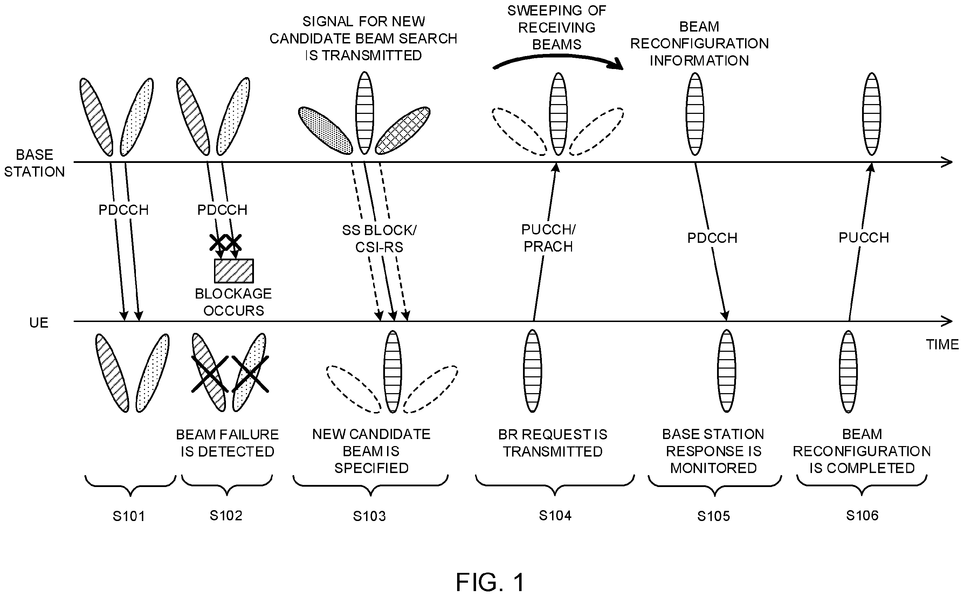

FIG. 1 is a diagram to show an example of BFR procedures. The number of beams and the like are simply examples and not limiting. In the initial state shown in FIG. 1 (step S101), a user terminal receives a downlink control channel (PDCCH (Physical Downlink Control CHannel)), which is transmitted from a radio base station by using two beams.

In step S102, the radio wave from the radio base station is blocked, and so the user terminal is unable to detect the PDCCH. Such blockage might occur due to, for example, the impact of obstacles between the user terminal and the radio base station, fading, interference and so forth.

The user terminal detects a beam failure when a predetermined condition is fulfilled. The predetermined condition may be, for example, the case in which all the measurement results of one or more pre-configured DL-RS resources are lower than a predetermined threshold Q_{out_LR}. The radio base station may judge that the user terminal has detected a beam failure when no indication arrives from the user terminal, or judge that a beam failure has been detected when a predetermined signal (the beam recovery request in step S104) arrives from the user terminal.

In step S103, for BFR, the user terminal starts a search for new candidate beams to use for communication anew. To be more specific, upon detecting a beam failure, the user terminal performs measurements based on pre-configured DL-RS resources, and identifies one or more new candidate beams that are preferred (that have good quality, for example). In this example, one beam is identified as a new candidate beam.

In step S104, the user terminal, having specified a new candidate beam, transmits a BFR request (BFR request signal or "BFRQ (BFR reQuest)"). The BFR request may be transmitted by using, for example, a random access channel (PRACH (Physical Random Access CHannel)).

PRACH resources may be configured by higher layer signaling (for example, RRC signaling). The PRACH resources may include time resources, frequency resources, the PRACH sequence, and so forth.

The BFR request may include information about the new candidate beam identified in step S103. The PRACH resource for the BFR request may be associated with the new candidate beam. For example, one or more PRACH resources and/or sequences may be configured for each new candidate beam, so that the user terminal can determine the resource and/or the sequence for a PRACH to transmit as a BFR request depending on the new candidate beam specified. Information about the beam may be reported by using, for example, a beam index (BI), a predetermined reference signal's port and/or resource index (for example, CSI-RS resource indicator (CRI)), and so forth.

In step S105, the radio base station, having detected the BFR request, transmits a response signal to the BFR request (BFR request response (BFRQ response)) from the user terminal. This response signal is transmitted by using a control resource set (CORESET). The control resource set used for the BFR request response is also referred to as "CORESET-BFR." The UE may receive the PDSCH, the allocation of which is indicated based on the CORESET-BFR.

This BFR request response may include reconfiguration information (for example, DL-RS resource configuration information) associated with one or more beams. This BFR request response may be transmitted, for example, in a user-specific search space as a PDCCH, or may be transmitted in a user terminal-common search space as a PDCCH. Upon detecting the response signal, the user terminal may recognize that the BFR has been successful. The user terminal may determine which transmitting beam and/or receiving beam is to use, based on the beam reconfiguration information.

In step S106, the user terminal completes beam reconfiguration. In addition, the UE may transmit, to the radio base station, a message to indicate that beam reconfiguration has been completed. This message may be transmitted by using a PUCCH, for example.

In the BFR procedures shown in FIG. 1, the UE may control the completion of beam reconfiguration by at least one of reconfiguration, activation and re-indication of the transmission configuration indicator (TCI) state from the base station.

A BFR success may refer to, for example, the case in which the procedures reach the competition of beam reconfiguration (for example, step S106). Meanwhile, a BFR failure refers to the case in which the procedures do not reach step S106 (for example, a case where no candidate beam could be specified in step S103).

The state of the transmission configuration indicator (TCI) (TCI-state) may indicate information about the QCL of a predetermined downlink channel (for example, PDCCH, PDSCH, etc.). The user terminal may control the receiving processes of the downlink control channel (for example, PDCCH) based on the information about the QCL of this downlink control channel (QCL information).

The TCI-state may indicate information about the QCL of the PDCCH (also referred to as "QCL information," "QCL information for the PDCCH," etc.). This QCL information for the PDCCH is, for example, information about the QCL between this PDCCH (or the DMRS port for this PDCCH) and the DL-RS, and may include, for example, at least one of information about the DL-RS that holds a QCL relationship (DL-RS-related information) and information indicating the above QCL type (QCL type information).

The DL-RS-related information may include at least one of information to indicate a DL-RS that holds a QCL relationship and information to indicate the resource of this DL-RS. For example, when a user terminal is configured with a number of sets of reference signals (RS sets), the DL-RS-related information may, among the reference signals included in the RS sets, indicate predetermined DL-RSs that hold a QCL relationship with a PDSCH (or the DMRS port for a PDSCH) and the resources for the DL-RSs.

Alternatively, the QCL information for the PDCCH may be information about the QCL between the control resource set (CORESET) to which this PDCCH is mapped, and the DL-RS, and may include, for example, at least one of information to indicate CORESET that hold a QCL relationship and information to indicate the above QCL type.

A CORESET refers to a resource field where a PDCCH may be allocated, and may be comprised of predetermined frequency domain resources and time domain resources (for example, one or two OFDM symbols). A CORESET can be configured to be equal to or less than a system bandwidth (carrier bandwidth) or the maximum bandwidth where the user terminal can perform receiving processes.

The user terminal monitors (blind-decodes) the DCIs transmitted via a downlink control channel in the CORESETs (or the search spaces in the CORESETs), and detects the DCI for this user terminal.

For the user terminal, K (K≥1) TCI states (QCL information for K PDCCHs) per CORESET may be reported (configured) from the radio base station via higher layer signaling (for example, RRC signaling).

When a number of TCI states are configured for a CORESET (K>1), the radio base station may activate (specify) a predetermined TCI state (for example, one TCI state), for the user terminal, by a MAC CE. The MAC CE may indicate (include) the index of a CORESET for changing the TCI state, and one TCI state to configure for that CORESET. Also, the CORESET for changing the TCI state may be configured with two or more TCI state candidates, in advance, through higher layer signaling (for example, RRC signaling, etc.).

In addition, after a predetermined period (for example, four slots, ten symbols, etc.) passes after the MAC CE (PDSCH for communicating this MAC CE) is received, the user terminal may receive (including performing channel estimation, demodulation, etc.) the PDCCH subject to monitoring in the CORESET specified by the MAC CE, by assuming the TCI state specified by the MAC CE.

Note that, when a single TCI state is configured in association with a CORESET (K=1), it is not necessary to report the TCI state by using the MAC CE.

The user terminal determines the QCL of the PDCCH (or the DMRS port for the PDCCH) based on TCI state (QCL information for the PDCCH) configured or specified as described above. For example, the user terminal assumes that the DMRS port (or the CORESET) for the PDCCH is quasi-co-located (QCL) with a DL-RS that corresponds to the above TCI state, and controls the receiving processes for the PDCCH (for example, the decoding process and/or the demodulation process, etc.). By this means, the accuracy of receipt of the PDCCH can be improved.

Now, when no response signal to the BFR request (S104 in FIG. 1) from the base station can be detected in the BFR procedures, the UE may retransmit the BFR request. For example, control is exerted so that, if the period in which the UE monitors for a response signal to a BFR request from the base station (also referred to as the "time window") is configured and no response signal is detected in this time window, the BFR request is retransmitted.

This time window is configured as a predetermined range that follows after a BFR request is transmitted. For example, the time window's starting point may be configured a predetermined offset after a BFR request is transmitted, and the end point of this time window may be configured a predetermined period after the starting point. In this case, after the UE transmits a BFR request, there will be an offset period up to the point where the time window for monitoring for a response signal to the BFR request starts.

In addition, when the UE monitors for a response signal to the BFR request and receives this response signal in the time window, the UE reconfigures the beams. In this case, there will be a period it takes until the UE detects the response signal (monitoring period) and a period it takes after the response signal is received until the beams are reconfigured (reconfiguration period).

As described above, although the BFR procedures have a number of periods (for example, the offset period, the monitoring period, the reconfiguration period, etc.), how to control the UE operation in each period still poses a problem. Unless the UE properly performs the receiving operation for the control resource set or the like where the downlink control channel is allocated in each period, a deterioration of the quality of communication and/or the like might arise.

So, the present inventors have focused on the fact that the BFR procedures can be divided into a number of operation periods, and come up with the idea of controlling at least one of whether or not to receive (or monitor) control resource sets in each operation period and the types of the control resource sets to receive.

Now, embodiments of the present disclosure will be described below in detail with reference to the accompanying drawings. The herein-contained embodiments may be used individually, or may be used in combination. In the following description, the TCI states may refer to TCI states to be configured for the PDCCH.

### (BFR Procedures)

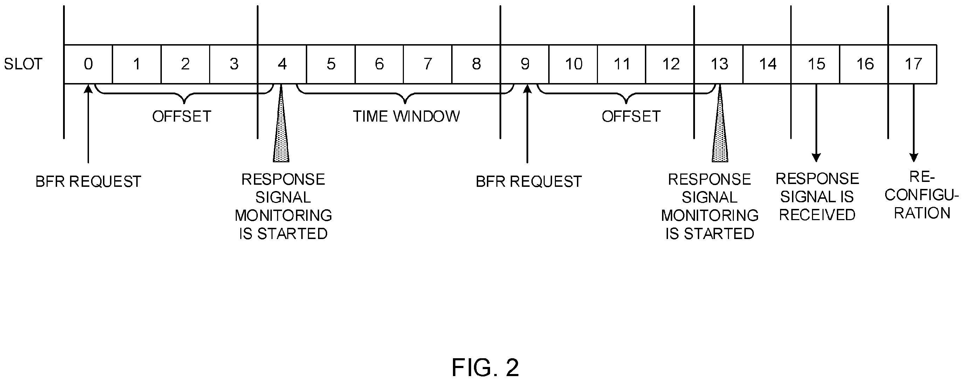

FIG. 2 is a diagram to show an example of BFR procedures. Note that the BFR procedures are by no means limited to the configuration shown in FIG. 2, and may be applied by changing the time window period and/or others as appropriate.

FIG. 2 shows BFR procedures over a predetermined time period (here, comprised of slots), but the time period is by no means limited to being slots, and may be comprised of subframes, minislots and so forth.

In FIG. 2, UE transmits a BFR request in slot #0. The operation pertaining to the BFR request may be performed in the same manner as in step S104 of FIG. 1.

After the BFR request is transmitted, the monitoring for a response signal to the BFR request is started after a predetermined offset period passes. For example, the offset period matches the number of slots from the slot in which the BFR request is transmitted to the slot in which the monitoring for a response signal is started, and may be a fixed value. FIG. 2 shows, as an example, a case where the offset period is four slots.

If the UE cannot receive a response signal within a predetermined time window after the monitoring for a response signal is started, the UE transmits a BFR request again. The time window period may be reported from the base station to the UE through higher layer signaling or the like, or may be a predefined value.

FIG. 2 shows a case in which the monitoring for a response signal is started from slot #4, and in which no response signal is detected within a predetermined time window range (here, slots #4 to #8). Therefore, the UE transmits a BFR request again in slot #9.

After the BFR request is retransmitted, the UE starts monitoring for a response signal to the BFR request, after a predetermined offset period (here, slots #9 to #12) passes. FIG. 2 shows a case in which the monitoring for a response signal is started from slot #13, and in which a response signal is received within the time window range (here, in slot #15).

After the response signal is received, beam reconfiguration (reconfiguration, activation or re-indication of the TCI state) is performed. FIG. 2 shows a case in which beam reconfiguration is completed in slot #17 (for example, when reconfiguration, activation or re-indication of the TCI state is received).

As shown in FIG. 2, in BFR procedures, there are (1) a period from the transmission of a BFR request (or the retransmission of a beam request) to the start of monitoring for a response signal (also referred to as the "offset period"), (2) a period from the start of monitoring for a response signal to the receipt of the response signal (also referred to as the "response signal monitoring period"), and (3) a period from the receipt of the response signal to the configuration, activation or re-indication of the TCI state (also referred to as the "reconfiguration period").

Hereinafter, the UE operation in each period will be described. Note that, in the following description, the receiving operation in UE for downlink control channels (or control resource sets) will be described, but the present embodiment may be applied to other signals and/or channels.

### <Offset Period>

In FIG. 2, slots #0 to #3 (or slot #1 to #4) and slots #9 to #12 (or slots #10 to #13) are offset periods. During these offset periods, the UE may perform one of UE operations 1-1 to 1-4 below:

### [UE Operation 1-1]

The UE is not required to monitor downlink control channels (PDCCHs) that relate to control resource set configurations (CORESET configurations) that are configured for the UE in advance. That is, the UE may exert control so as not to monitor downlink control channels during offset periods. In this case, it may be assumed that the UE receives no DCI formats.

Control may be exerted here so as not to monitor PDCCHs (or control resource sets) during offset periods, so that the power consumption can be reduced (power saving). In particular, when a BFR request is transmitted (beam recovery is performed), the quality of PDCCHs that correspond to the control resource sets configured for the UE is equal to or less than a predetermined value, and, consequently, it would be effective to make it unnecessary to receive PDCCHs that show low quality (and that are therefore little likely to be received successfully).

Also, the UE is given opportunities to monitor PDCCHs (for example, CORESET-BFR) during periods after offset periods (for example, response signal monitoring periods), so that it is possible to communicate properly without receiving PDCCH during offset periods.

### [UE Operation 1-2]

The UE is not required to monitor PDCCHs that relate to particular control resource set configurations (particular CORESET configurations) that are configured for the UE in advance. That is, the UE may limit the types of control resource sets to monitor (or receive) during offset periods. For example, the UE may exert control so that the PDCCH corresponding to a first control resource set is received and the PDCCH corresponding to a second control resource set is not received.

The first control resource set corresponding to the PDCCH that is monitored by the UE may be reported from the base station to the UE in advance, or may be defined in the specification. For example, the first control resource set may be a control resource set that is configured by the PBCH of an SS/PBCH block (for example, a control resource set that is used to receive system information). In this case, the UE monitors the PDCCH corresponding to the PBCH of the SS/PBCH block, and does not monitor PDCCHs corresponding to other control resource sets.

In this way, the UE can limit the type of the control resource set to monitor, so that information that is transmitted using the first control resource set is received, while it is made unnecessary to monitor the second control resource set, and therefore it is possible to reduce the load of the receiving operation upon the UE to some extent.

### [UE Operation 1-3]

The UE is not required to monitor the PDCCH related to a particular search space that is configured for the UE in advance. That is, the UE may limit the types of search spaces to monitor (or receive) during offset periods. For example, the UE may exert control so that the PDCCH corresponding to a first search space is received and the PDCCH corresponding to a second search space is not received.

The first search space corresponding to the PDCCH that is monitored by the UE may be reported from the base station to the UE in advance, or may be defined in the specification. For example, the first search space may be a common search space, and the second search space may be a UE-specific search space. Alternatively, the first search space may be a UE-specific search space, and the second search space may be a common search space.

In this way, the UE can limit the type of the search space to monitor, so that information that is transmitted using the first search space is received, while it is made unnecessary to monitor the second search space, and therefore it is possible to reduce the load of the receiving operation upon the UE to some extent. Furthermore, by making the first search space a common search space, it is possible to properly receive information that a number of UEs need, even during offset periods.

### [UE Operation 1-4]

The UE monitors PDCCHs as in the case in which BFR procedures are not performed (or BFR procedures are not triggered). That is, the UE continues monitoring control resource sets that are configured based on conditions configured before a beam failure occurs.

For example, the UE keeps monitoring control resource sets associated with one or more TCI states that are configured by the base station before a beam failure occurs (or before a BFR request is transmitted). In this case, the UE may monitor all the search space configurations allocated (or mapped) to the control resource sets.

The base station does not know that a beam failure has occurred in the UE during an offset period (for example, in part of an offset period), so that the base station may transmit data to the UE in the same way as before BFR is performed. Therefore, when the UE can receive data to some extent properly during the offset period, the UE performs receiving processes in the same manner as before a BFR request is transmitted, so that the UE can continue receiving the data.

### <Response Signal Monitoring Period>

In FIG. 2, slots #13 and #14 (or slots #14 and #15) are a response signal monitoring period. During the response signal monitoring period, the UE may perform one of UE operations 2-1 and 2-2 below:

### [UE Operation 2-1]

The UE monitors PDCCHs that relate only to the control resource set (CORESET-BFR) that is used to transmit a response signal to the BFR request. That is, even when the UE is configured with a number of control resource set configurations (CORESET configurations), the UE is controlled so as to receive PDCCHs that relate only to the CORESET-BFR.

In this case, the UE may exert control so that all the search space configurations allocated to the CORESET-BFR are subject to monitoring. Furthermore, the UE may assume not receiving DCI formats other than the DCI format that is used for the CORESET-BFR.

Control is exerted here so as not to monitor PDCCHs other than the PDCCHs (or control resource sets) corresponding to the CORESET-BFR during the response signal monitoring period, so that the power consumption can be reduced (power saving). In particular, when the UE transmits a BFR request, the quality of PDCCHs that correspond to control resource sets configured for the UE is equal to or less than a predetermined value, and, consequently, it would be effective to make it unnecessary to receive low-quality PDCCHs that are other than the PDCCHs for use for transmitting a response signal (and that are therefore little likely to be received successfully).

### [UE Operation 2-2]

The UE monitors PDCCHs related to other control resource sets, in addition to the PDCCHs related to the control resource set (CORESET-BFR) that is used to transmit a response signal to a BFR request.

The UE may monitor control resource sets related to new beams (for example, new candidate beams) and the PDCCH corresponding to the CORESET-BFR (option 1).

If a control resource set that is configured for the UE is related to a predetermined TCI state, the UE may discard (or abandon) the TCI state that is configured for the control resource set before a beam failure occurs (or before a BFR request is transmitted). In this case, the UE may autonomously apply a new candidate beam and/or a reference signal index (RS index) to this control resource set and control the receipt of the PDCCH.

The new candidate beam may be a candidate beam that is searched by the UE when transmitting the BFR request. For example, a new candidate beam that is selected in the operation of step S103 in FIG. 1 may be applied. Also, the UE may exert control so that all the search space configurations allocated to the CORESET-BFR and/or other CORESETs are subject to monitoring.

The receipt of control resource sets is controlled using a new candidate beams, so that receipt using beams with higher quality is made possible.

Alternatively, the UE may control the receipt of PDCCHs corresponding to control resource sets by using the same beams as before beam failures occur (or before BFR requests are transmitted) (option 2).

In this case, the UE keeps monitoring control resource sets configured in association with one or more TCI states that are configured by the base station before a beam failure occurs (or before a BFR request is transmitted). In this case, the UE may exert control so that all the search space configurations allocated to the CORESET-BFR and/or other CORESETs are subject to monitoring.

In this way, the base station is allowed to transmit DCIs by using the CORESET-BFR and other CORESETs, so that scheduling can be performed flexibly.

### <Reconfiguration Period>

In FIG. 2, slots #15 and #16 (or slots #16 and #17) are a reconfiguration period. During the reconfiguration period, the UE may perform one of UE operations 3-1 to 3-3 below:

### [UE Operation 3-1]

The UE monitors PDCCHs that relate only to the control resource set (CORESET-BFR) that is used to transmit a response signal to the BFR request. That is, even when the UE is configured with a number of control resource set configurations (CORESET configurations), the UE is controlled so as to receive PDCCHs that relate only to the CORESET-BFR.

In this case, the UE may exert control so that all the search space configurations allocated to the CORESET-BFR are subject to monitoring. Furthermore, the UE may assume not receiving DCI formats other than the DCI format that is used for the CORESET-BFR.

Control is exerted here so as not to monitor PDCCHs other than the PDCCHs (or control resource sets) corresponding to the CORESET-BFR during the reconfiguration period, so that the power consumption can be reduced (power saving). In particular, when the UE transmits a BFR request, the quality of PDCCHs that correspond to control resource sets configured for the UE is equal to or less than a predetermined value, and, consequently, it would be effective to make it unnecessary to receive low-quality PDCCHs that are other than the PDCCHs for use for transmitting a response signal (and that are therefore little likely to be received successfully).

### [UE Operation 3-2]

The UE does not monitor PDCCHs that relate to the control resource set that is used to transmit the response signal to the BFR request (CORESET-BFR). In this case, when the UE is configured with a number of control resource set configurations (CORESET configurations), this UE may monitor PDCCHs that correspond to control resource sets other than the CORESET-BFR.

For example, the UE monitors PDCCHs that correspond to a default control resource set (default CORESET) by using new beams (for example, new candidate beams) (option 1).

The default control resource set may be the control resource set with the smallest index (lowest ID) among a number of control resource sets (for example, multiple control resource sets configured to the UE). Obviously, the default control resource set is not limited to this, and may be a specific control resource set that is derived from other conditions.

If the default control resource set is related to a predetermined TCI state, the UE may discard (or abandon) the TCI state that is configured for the default control resource set before a beam failure occurs (or before a BFR request is transmitted). In this case, the UE may autonomously apply a new candidate beam and/or a reference signal index (RS index) to this default control resource set and control the receipt of the PDCCH.

The new candidate beam may be a candidate beam that is searched by the UE when transmitting the BFR request. For example, a new candidate beam that is selected in the operation of step S103 in FIG. 1 may be applied. Also, the UE may be controlled to monitor all the search space configurations that are allocated to the default control resource set.

The monitoring of PDCCHs is controlled to be limited to the default control resource set, so that the monitoring of PDCCHs associated with unreliable beams can be omitted, and therefore the power consumption of the terminal can be reduced.

Alternatively, the UE may monitor PDCCHs that correspond to control resource sets that are configured for the UE by using new beams (for example, new candidate beams) (option 2).

If one or more control resource sets that are configured for the UE are each related to a predetermined TCI state, the UE may discard (or abandon) the TCI state that is configured for the control resource set before a beam failure occurs (or before a BFR request is transmitted). In this case, the UE may autonomously apply a new candidate beam and/or a reference signal index (RS index) to this control resource set and control the receipt of the PDCCH.

Also, the UE may exert control so that all the search space configurations allocated to the control resource sets configured for the UE are subject to monitoring.

Alternatively, the UE may monitor PDCCHs corresponding to control resource sets that are configured for the UE by using new beams (for example, new candidate beams) a predetermined number of slots (for example, X slots) after a response signal is received (option 3). Note that the value of X may be a fixed value that is defined in advance, or may be a value reported to the UE by using higher layer signaling or the like.

Furthermore, the UE may not receive at least one of reconfiguration, activation and re-indication of the TCI state for a PDCCH within X slots after the response signal.

In this case, the UE monitors PDCCHs associated with control resource sets by using new beams, and stops monitoring PDCCHs associated with the CORESET-BFR. That is, the UE may monitor the CORESET-BFR within X slots after a response signal is received.

In this way, by monitoring PDCCHs that correspond to control resource sets by using new beams a predetermined number of slots after a response signal is received, it is possible to communicate by using PDCCHs associated with beams of higher quality that are newly configured for data communication.

### [UE Operation 3-3]

The UE monitors PDCCHs related to the control resource set (CORESET-BFR) that is used to transmit a response signal to a BFR request, and, in addition, monitors PDCCH related to other control resource sets by using new beams.

If a control resource set that is configured for the UE is related to a predetermined TCI state, the UE may discard (or abandon) the TCI state that is configured for the control resource set before a beam failure occurs (or before a BFR request is transmitted). In this case, the UE may autonomously apply a new candidate beam and/or a reference signal index (RS index) to this control resource set and control the receipt of the PDCCH.

Also, the UE may exert control so that all the search space configurations allocated to the CORESET-BFR and/or other CORESETs are subject to monitoring.

The receipt of control resource sets is controlled using a new candidate beams, so that receipt using beams with higher quality is made possible.

Also, the base station is allowed to transmit DCIs by using the CORESET-BFR and other CORESETs, so that scheduling can be performed flexibly.

### <Variations>

In the above description, cases of controlling the respective UE operations in the offset period, the response signal monitoring period and the reconfiguration period have been described, but the present embodiment is not limited to this. For example, the offset period and the response signal monitoring period may be defined as one period, and the UE operation in the offset period or the UE operation in the response signal monitoring period described above may be applied to this. Alternatively, the response signal monitoring period and the reconfiguration period may be defined as one period, and the UE operation in the response signal monitoring period or the UE operation in the reconfiguration period, which has been described above, may be applied to this. Alternatively, the offset period, the response signal monitoring period and the reconfiguration period may be defined as one period, the UE operation in the offset period, the UE operation in the response signal monitoring period or the UE operation in the reconfiguration period, which have been described above, may be applied to this.

### (Radio Communication System)

Now, the structure of a radio communication system according to the present embodiment will be described below. In this radio communication system, communication is performed using at least one of the above examples or a combination of them.

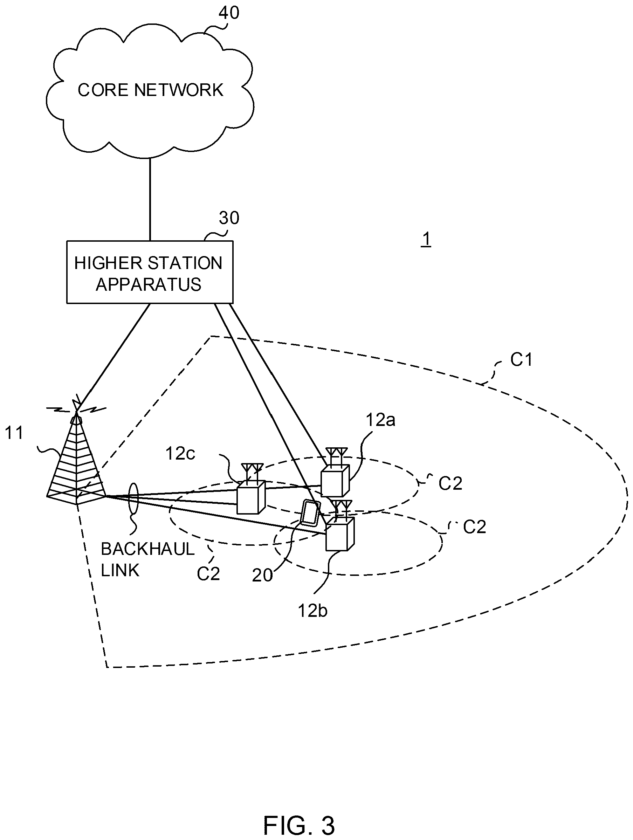

FIG. 3 is a diagram to show an exemplary schematic structure of a radio communication system according to the present embodiment. A radio communication system 1 can adopt carrier aggregation (CA) and/or dual connectivity (DC) to group a number of fundamental frequency blocks (component carriers) into one, where the LTE system bandwidth (for example, 20 MHz) constitutes one unit.

Note that the radio communication system 1 may be referred to as "LTE (Long-term evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a radio base station 11 that forms a macro cell C1, with a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement and number of cells and user terminals 20 and so forth are not limited to those illustrated in the drawings.

The user terminals 20 can connect with both the radio base station 11 and the radio base stations 12. The user terminals 20 might use the macro cell C1 and the small cells C2 at the same time by means of CA or DC. Furthermore, the user terminals 20 may apply CA or DC using a number of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

Furthermore, the user terminals 20 can communicate by using time division duplexing (TDD) and/or frequency division duplexing (FDD), in each cell. Furthermore, in each cell (carrier), a single numerology may be used, or a number of different numerologies may be used.

A numerology may refer to a communication parameter that is applied to transmission and/or receipt of a given signal and/or channel, and represent at least one of the subcarrier spacing, the bandwidth, the duration of symbols, the length of cyclic prefixes, the duration of subframes, the length of TTIs, the number of symbols per TTI, the radio frame configuration, the filtering process, the windowing process, and so on.

The radio base station 11 and a radio base station 12 (or two radio base stations 12) may be connected with each other by cables (for example, by optical fiber, which is in compliance with the CPRI (Common Public Radio Interface), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but these are by no means limiting. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations each having a local coverage, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

The user terminals 20 are terminals that support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a number of narrow frequency bandwidths (subcarriers) and mapping data to each subcarrier. SC-FDMA is a single-carrier communication scheme to mitigate interference between terminals by dividing the system bandwidth into bands that are each formed with one or contiguous resource blocks, per terminal, and allowing a number of terminals to use mutually different bands. Note that the uplink and downlink radio access schemes are not limited to the combinations of these, and other radio access schemes may be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Blocks) is communicated in the PBCH.

The L1/L2 control channels include at least one of DL control channels (such as a PDCCH (Physical Downlink Control CHannel) and/or an EPDCCH (Enhanced Physical Downlink Control CHannel)), a PCFICH (Physical Control Format Indicator CHannel), and a PHICH (Physical Hybrid-ARQ Indicator CHannel). Downlink control information (DCI), which includes PDSCH and/or PUSCH scheduling information and so on, is communicated by the PDCCH.

Note that scheduling information may be reported in DCI. For example, the DCI to schedule receipt of DL data may be referred to as "DL assignment," and the DCI to schedule transmission of UL data may also be referred to as "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that the DMRSs may be referred to as "user terminal-specific reference signals (UE-specific reference signals)." Also, the reference signals to be communicated are by no means limited to these.

### <Radio Base Station>

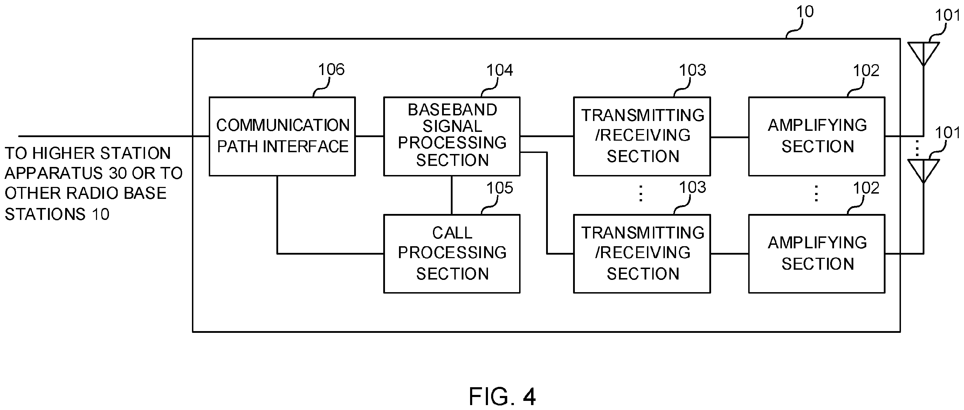

FIG. 4 is a diagram to show an exemplary overall structure of a radio base station according to the present embodiment. A radio base station 10 has a number of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30, to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base station 10, and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 may furthermore have an analog beamforming section where analog beamforming takes place. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 101 may be constituted by, for example, array antennas. In addition, the transmitting/receiving sections 103 are designed so that single-BF or multiple-BF operations can be used.

The transmitting/receiving sections 103 may transmit signals by using transmitting beams, or receive signals by using receiving beams. The transmitting/receiving sections 103 may transmit and/or receive signals by using predetermined beams determined by the control section 301.

Furthermore, the transmitting/receiving sections 103 may receive a beam failure recovery request (for example, a BFR request) or transmit a response to a beam failure recovery request (for example, a BFR request response). Also, the transmitting/receiving sections 103 may transmit a downlink control channel by using a control resource set that is used to transmit a BFR request response signal (CORESET-BFR).

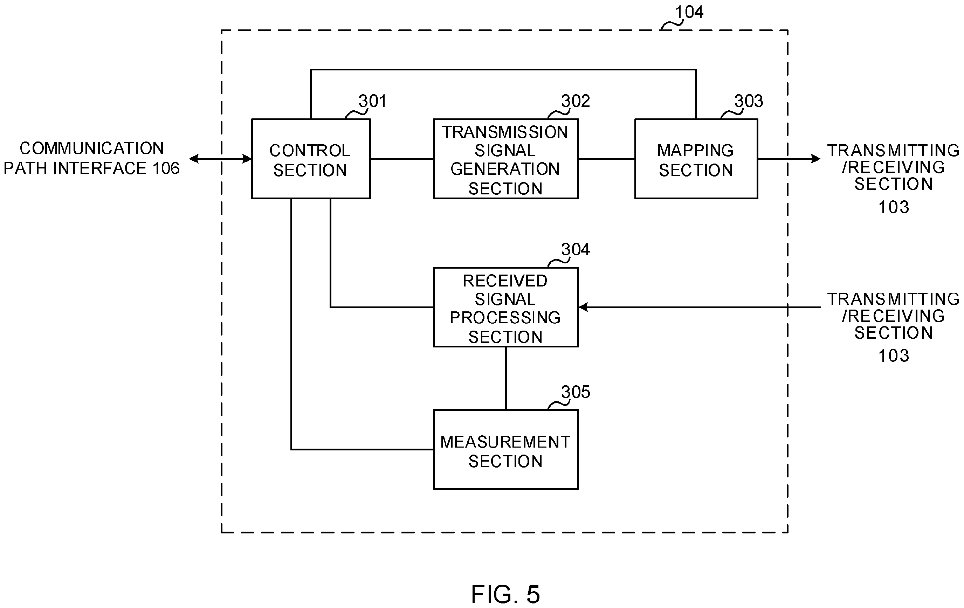

FIG. 5 is a diagram to show an exemplary functional structure of a radio base station according to the present embodiment. Note that, although this example primarily shows functional blocks that pertain to characteristic parts of the present embodiment, the radio base station 10 might have other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and part or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301 controls, for example, generation of signals in the transmission signal generation section 302, allocation of signals in the mapping section 303, and so on. Furthermore, the control section 301 controls signal receiving processes in the received signal processing section 304, measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). Also, the control section 301 controls the generation of downlink control signals, downlink data signals, and so on based on the results of deciding whether or not retransmission control is necessary for uplink data signals, and so on.

The control section 301 controls scheduling of synchronization signals (for example, PSS/SSS), downlink reference signals (for example, CRS, CSI-RS, DMRS, etc.) and the like.

The control section 301 may exert control so that transmitting beams and/or receiving beams are formed by using digital BF (for example, precoding) in the baseband signal processing section 104 and/or analog BF (for example, phase rotation) in the transmitting/receiving sections 103.

Furthermore, the control section 301 may exert control so that a response signal is transmitted based on a beam failure recovery request (for example, a BFR request). The control section 301 may exert control so that at least one of whether or not to transmit control resource sets and the types of control resource sets to transmit is controlled during at least one of a first period after a beam failure recovery request is transmitted, up to the start of monitoring for a response signal, a second period from the start of monitoring for the response signal, up to the receipt of the response signal, and a third period from the receipt of the response signal to when reconfiguration is performed.

The control section 301 may exert control so that downlink control channels that correspond to part or all of the control resource set types are not transmitted during the first period. Furthermore, the control section 301 may exert control so that at least downlink control channels that correspond to the control resource set that is used to transmit a response signal are transmitted during the second period and/or the third period.

Furthermore, the control section 301 may exert control so that downlink control channels that correspond to control resource sets other than the control resource set that is used to transmit a response signal by using new beam candidates are transmitted during the second period and/or the third period. Furthermore, the control section 301 may exert control so that downlink control channels that correspond to the control resource set that is used to transmit a response signal are not received during the third period.

The transmission signal generation section 302 generates downlink signals (downlink control signals, downlink data signals, downlink reference signals, and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, the downlink data signals are subjected to the coding process, the modulation process and so on, by using coding rates, modulation schemes and the like that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). The received signal processing section 304 can be constituted by a signal processor, a signal processing circuit or signal processing apparatus that can be described based on general understanding of the technical field to which the present invention pertains.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements, and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), transmission path information (for example, CSI) and so on. The measurement results may be output to the control section 301.

### <User Terminal>

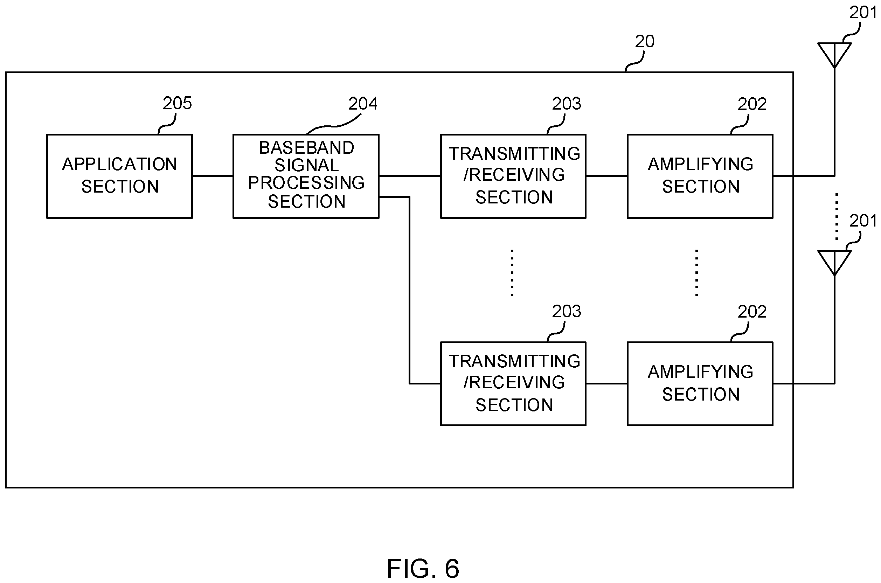

FIG. 6 is a diagram to show an exemplary overall structure of a user terminal according to the present embodiment. A user terminal 20 has a number of transmitting/receiving antennas 201, amplifying sections 202, transmitting/receiving sections 203, a baseband signal processing section 204, and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process, and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203.

Baseband signals that are output from the baseband signal processing section 204 are converted into a radio frequency band in the transmitting/receiving sections 203, and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 may further have an analog beamforming section where analog beamforming takes place. The analog beamforming section may be constituted by an analog beamforming circuit (for example, a phase shifter, a phase shifting circuit, etc.) or analog beamforming apparatus (for example, a phase shifting device) that can be described based on general understanding of the technical field to which the present invention pertains. Furthermore, the transmitting/receiving antennas 201 may be constituted by, for example, array antennas. In addition, the transmitting/receiving sections 203 are structured so that single-BF and multiple-BF can be used.

The transmitting/receiving sections 203 may transmit signals by using transmitting beams, or receive signals by using receiving beams. The transmitting/receiving sections 203 may transmit and/or receive signals by using predetermined beams selected by the control section 401.

Furthermore, the transmitting/receiving sections 103 may transmit a beam failure recovery request (for example, a BFR request) or receive a response to a beam failure recovery request (for example, a BFR request response). Also, the transmitting/receiving sections 103 may transmit a downlink control channel by using a control resource set that is used to transmit a BFR request response signal (CORESET-BFR).

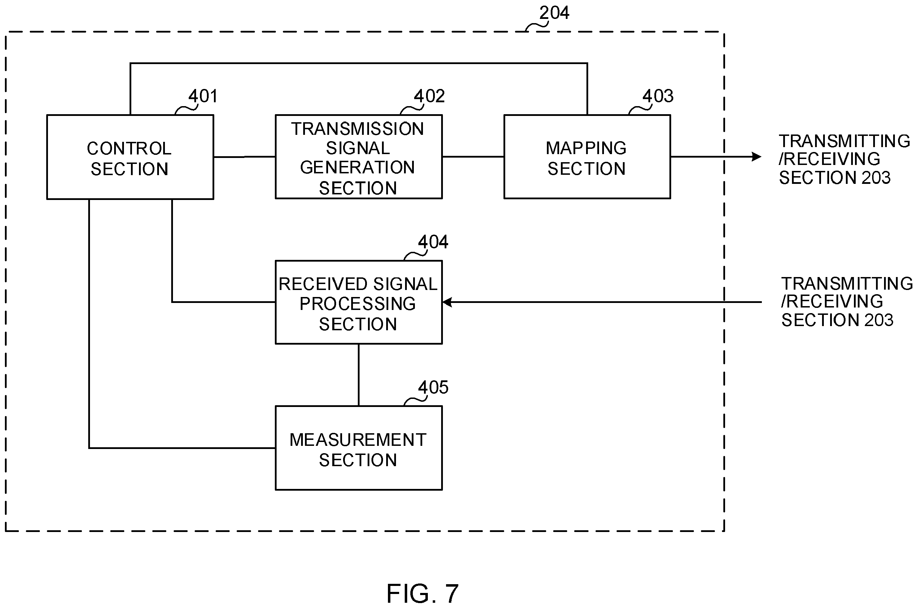

FIG. 7 is a diagram to show an exemplary functional structure of a user terminal according to the present embodiment. Note that, although this example primarily shows functional blocks that pertain to characteristic parts of present embodiment, the user terminal 20 might have other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations have only to be included in the user terminal 20, and part or all of these configurations may not be included in the baseband signal processing section 204.

The control section 401 controls the whole of the user terminal 20. The control section 401 can be constituted by a controller, a control circuit or control apparatus that can be described based on general understanding of the technical field to which the present invention pertains.

The control section 401 controls, for example, generation of signals in the transmission signal generation section 402, allocation of signals in the mapping section 403, and so on. Furthermore, the control section 401 controls signal receiving processes in the received signal processing section 404, measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on results of deciding whether or not retransmission control is necessary for the downlink control signals and/or downlink data signals, and so on.

The control section 401 may exert control so that transmitting beams and/or receiving beams are formed by using digital BF (for example, precoding) in the baseband signal processing section 204 and/or by using analog BF (for example, phase rotation) in the transmitting/receiving sections 203.

The control section 401 may exert control so that at least one of whether or not to receive control resource sets and the types of control resource sets to receive is controlled during at least one of a first period after a beam failure recovery request is transmitted, up to the start of monitoring for a response signal, a second period from the start of monitoring for the response signal, up to the receipt of the response signal, and a third period from the receipt of the response signal to when reconfiguration is performed.

For example, the control section 401 may exert control so that downlink control channels corresponding to part or all of types of control resource sets are not received during the first period. Furthermore, the control section 401 may exert control so that a downlink control channel that corresponds to at least the control resource set that is used to transmit a response signal is received during the second period and/or the third period.

Also, the control section 401 may exert control so that a downlink control channel corresponding to a control resource set other than a control resource set that is used to transmit the response signal by using a new beam candidate is received during the second period and/or the third period. Also, the control section 401 exerts control so that a downlink control channel that corresponds to the control resource set that is used to transmit a response signal is not received during the third period.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or signal generation apparatus that can be described based on general understanding of the technical field to which the present invention pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) for received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present disclosure.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements, and so on, based on the received signals. The measurement section 405 may measure the received power (for example, RSRP), the received quality (for example, RSRQ, SINR, SNR, etc.), the signal strength (for example, RSSI), transmission path information (for example, CSI), and so on. The measurement results may be output to the control section 401.

### <Hardware Structure>

Note that the block diagrams that have been used to describe the present embodiment show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically-separate pieces of apparatus (by using cables and/or radio, for example) and using these multiple pieces of apparatus.

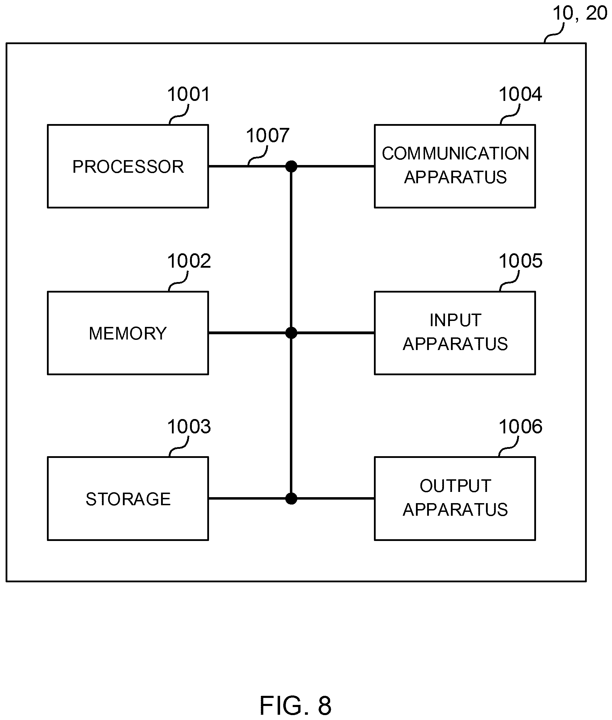

For example, the radio base station, user terminals, and so on according to the present embodiment may function as a computer that executes the processes of each example of the present embodiment. FIG. 8 is a diagram to show an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006, a bus 1007 and so on.

Note that, in the following description, the term "apparatus" may be replaced by "circuit," "device," "unit" and so on. The hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented simultaneously or in sequence, or by using different techniques, on one or more processors. Note that the processor 1001 may be implemented with one or more chips.

The functions of the radio base station 10 and the user terminal 20 are implemented by, for example, allowing hardware such as the processor 1001 and the memory 1002 to read predetermined software (programs), and allowing the processor 1001 to do calculations, control communication that involves the communication apparatus 1004, control the reading and/or writing of data in the memory 1002 and the storage 1003, and so on.

The processor 1001 may control the whole computer by, for example, running an operating system. The processor 1001 may be constituted by a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of a user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)," and so on. The memory 1002 can store executable programs (program codes), software modules, and so on for implementing the radio communication methods according to the present embodiment.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) or the like), a digital versatile disc, a Blu-ray (registered trademark) disk, etc.), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on, in order to implement, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from outside (for example, a keyboard, a mouse, a microphone, a switch, a button, a sensor and so on). The output apparatus 1006 is an output device for executing output to outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on, are connected by the bus 1007, so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by these pieces of hardware. For example, the processor 1001 may be implemented with at least one of these pieces of hardware.

### (Variations)

Note that, the terminology used in this specification and the terminology that is needed to understand this specification may be replaced by other terms that communicate the same or similar meanings. For example, "channels" and/or "symbols" may be replaced by "signals" (or "signaling"). Also, a signal may be a message. A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency," and so on.

Furthermore, a radio frame may be comprised of one or more periods (frames) in the time domain. One or more periods (frames) that constitute a radio frame may be each referred to as a "subframe." Furthermore, a subframe may be comprised of one or more slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of minislots. Each minislot may be comprised of one or more symbols in the time domain. Also, a minislot may be referred to as a "subslot."

A radio frame, a subframe, a slot, a minislot, and a symbol all refer to a unit of time in signal communication. A radio frame, a subframe, a slot, a minislot and a symbol may be each called by other applicable names. For example, one subframe may be referred to as a "transmission time interval (TTI)," or a plurality of consecutive subframes may be referred to as a "TTI," or one slot or one minislot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent a TTI may be referred to as a "slot," a "minislot" and so on, instead of a "subframe."

Here, a TTI refers to the minimum time unit for scheduling in radio communication, for example. For example, in LTE systems, a radio base station schedules the radio resources (such as the frequency bandwidth and transmission power each user terminal can use) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when one slot or one minislot is referred to as a "TTI," one or more TTIs (that is, one or more slots or one or more minislots) may be the minimum time unit of scheduling. Also, the number of slots (the number of minislots) to constitute this minimum time unit for scheduling may be controlled.

A TTI having a time length of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," a "minislot," a "sub-slot," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one minislot, one subframe or one TTI in length. One TTI and one subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair," and so on.

Furthermore, a resource block may be comprised of one or more resource elements (REs). For example, one RE may be a radio resource field of one subcarrier and one symbol.

Note that the structures of radio frames, subframes, slots, minislots, symbols, and so on described above are simply examples. For example, configurations pertaining to the number of subframes included in a radio frame, the number of slots included in a subframe or a radio frame, the number of minislots included in a slot, the number of symbols and RBs included in a slot or a minislot, the number of subcarriers included in an RB, the number of symbols in a TTI, the length of symbols, the length of cyclic prefix (CP), and so on can be variously changed.

Also, the information and parameters described in this specification may be represented in absolute values or in relative values with respect to predetermined values, or may be represented using other applicable information. For example, a radio resource may be indicated by a predetermined index.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals, and so on may be input and/or output via a plurality of network nodes.

The information, signals, and so on that are input and/or output may be stored in a specific location (for example, in a memory), or may be managed in a control table. The information, signals, and so on to be input and/or output can be overwritten, updated, or appended. The information, signals, and so on that are output may be deleted. The information, signals, and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling, etc.), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as "RRC messages," and can be, for example, an "RRC connection setup message," "RRC connection reconfiguration message," and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent in an implicit way (for example, by not reporting this piece of information, or by reporting another piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode," or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, instructions, information and so on may be transmitted and received via communication media. For example, when software is transmitted from a website, a server or other remote sources by using wired technologies (coaxial cables, optical fiber cables, twisted-pair cables, digital subscriber lines (DSL) and so on), and/or wireless technologies (infrared radiation, microwaves, and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)," "user terminal," "user equipment (UE)," and "terminal" may be used interchangeably.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, the examples/embodiments of the present disclosure may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed to communicate with terminals can be performed by base stations, one or more network nodes (for example, MMEs (Mobility Management Entities), S-GWs (Serving-Gateways) and so on may be possible, but these are not limiting) other than base stations, or combinations of these.

The examples/embodiments illustrated in this specification may be used individually or in combinations, which may be switched depending on the mode of implementation. The order of processes, sequences, flowcharts, and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to systems that use LTE (Long-term evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark)(Global System for Mobile communications), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), other adequate radio communication methods, and/or next-generation systems that are enhanced based on these.

The phrase "based on" as used in this specification does not mean "based only on" unless otherwise specified. In other words, the phrase "based on" means both "based only on" and "based at least on."

Reference to elements with designations such as "first," "second," and so on as used herein does not generally limit the number/quantity or order of these elements. These designations are used herein only for convenience, as a method for distinguishing between two or more elements. It follows that reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database, or some other data structure), ascertaining, and so on. Furthermore, to "judge" and "determine" as used in the present disclosure may be interpreted as meaning making judgements and determinations related to receiving (for example, receiving information), transmitting (for example, transmitting information), inputting, outputting, accessing (for example, accessing data in a memory) and so on. In addition, to "judge" and "determine" as used in the present disclosure may be interpreted as meaning making judgements and determinations related to resolving, selecting, choosing, establishing, comparing, and so on. In other words, to "judge" and "determine" as used in the present disclosure may be interpreted as meaning making judgements and determinations with regard to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access."

As used herein, when two elements are connected, these elements may be considered "connected" or "coupled" to each other by using one or more electrical wires, cables, and/or printed electrical connections, and, as a number of non-limiting and non-inclusive examples, by using electromagnetic energy having wavelengths of the radio frequency region, the microwave region and/or the optical region (both visible and invisible).

In the present specification, the phrase "A and B are different" may mean "A and B are different from each other." The terms such as "leave," "coupled" and the like may be interpreted likewise.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a transmitting section that transmits a beam failure recovery request;
a receiving section that receives a response signal to the beam failure recovery request; and
a control section that controls at least one of whether or not to receive a control resource set and a type of a control resource set to receive, in at least one of a first period from transmission of the beam failure recovery request to start of monitoring for the response signal, a second period from the start of monitoring for the response signal to receipt of the response signal, and a third period from the receipt of the response signal to when reconfiguration is performed.

2. The user terminal according to claim 1, wherein the control section controls so that downlink control channels corresponding to part or all of types of control resource sets are not received during the first period.

3. The user terminal according to claim 1 or claim 2, wherein the control section controls so that a downlink control channel corresponding to at least a control resource set that is used to transmit the response signal is received during the second period and/or the third period.

4. The user terminal according to one of claim 1 to claim 3, wherein the control section controls so that a downlink control channel that corresponds to a control resource set other than a control resource set that is used to transmit the response signal by using a new beam candidate is received during the second period and/or the third period.

5. The user terminal according to claim 1 or claim 2, wherein the control section controls so that a downlink control channel corresponding to a control resource set that is used to transmit the response signal is not received during the third period.

6. A radio communication method comprising, in a user terminal, the steps of:
transmitting a beam failure recovery request;
receiving a response signal to the beam failure recovery request; and
controlling at least one of whether or not to receive a control resource set and a type of a control resource set to receive, in at least one of a first period from transmission of the beam failure recovery request to start of monitoring for the response signal, a second period from the start of monitoring for the response signal to receipt of the response signal, and a third period from the receipt of the response signal to when reconfiguration is performed.
